# EUROPÄISCHE PATENTSCHRIFT

(11) **EP 0 290 085 B1**
(45) Veröffentlichungstag und Bekanntmachung des Hinweises auf die Patenterteilung: **20.03.1996**
(21) Anmeldenummer: 88200818.8
(22) Anmeldetag: 27.04.1988
(51) Int. Cl.: H04N 7/30, H04N 11/04

(54) **System zur Übertragung von Videobildern**
System for the transmission of video pictures
Système pour la transmission d'images vidéo

(30) Priorität: 06.05.1987 DE 3715067; 07.05.1987 DE 3715147; 10.08.1987 DE 3726520; 28.12.1987 DE 3744280
(43) Veröffentlichungstag der Anmeldung: 09.11.1988
(73) Patentinhaber: Philips Patentverwaltung GmbH, D-22335 Hamburg (DE); Philips Electronics N.V., NL-5621 BA Eindhoven (NL)
(72) Erfinder: Vogel, Peter, Dipl.-Ing., D-8566 Diepersdorf (DE)
(74) Vertreter: Peuckert, Hermann, Dipl.-Ing.

(56) Entgegenhaltungen:
- EP-A- 0 248 711
- CONFERENCE RECORD IEEE/IEICE GLOBAL TELECOMMUNICATIONS CONFERENCE, Tokyo, 15. - 18. November 1987, Band 1, Seiten 36-39, IEEE, New York, US; S. OKUBO et al.: "Progress of CCITT standardization on n x 384 kbit/s video codec"
- PROCEEDINGS IEEE INTERNATIONAL CONFERENCE ON COMMUNICATIONS, Amsterdam, 14. - 17. Mai 1984, Band 1, Seiten 516-520, IEEE, New York, US; C.M. LIN et al.: "Motion compensated interframe color image coding"
- CONFERENCE RECORD IEEE GLOBAL TELECOMMUNICATIONS CONFERENCE, Hollywood, Florida, 28. November - 1. Dezember 1988, Band 2, Seiten 1005-1010, IEEE, New York, US; M. CARR et al.: "Motion video coding in CCITT SGXV - The video multiplex and transmission coding"
- CCITT SGXV, Working Party XV/1, Specialist Group on Coding for Visual Telephony, Document #141, 12/09/86

## Beschreibung

Die Erfindung betrifft ein Verfahren zur Übertragung von Videobildern mit einem Hybrid-Codierer zur blockweisen Codierung der Daten eines ankommenden Videobildes, wobei in einem Bildspeicher des Hybrid-Codierers die Daten des vorangegangenen Videobildes gespeichert sind, das gespeicherte Videobild und das ankommende Videobild blockweise subtrahiert werden um Differenzblöcke zu bilden, die Blöcke des ankommenden Videobildes oder des Differenzbildes transformiert und quantisiert werden zur Bildung von Hauptinformation, für die zu codierenden Blöcke ein Bewegingsvektor gebildet wird, für jeden zu codierenden Block Nebeninformation über folgende Blockattribute gebildet wird:
a) der transformierte und quantisierte Block ist der Differenzblock oder der ursprüngliche Block,
b) der Bewegungsvektor hat den Betrag Null oder nicht,
c) die Hauptinformation besteht nur aus Nullen oder nicht nur aus Nullen, und mit einem Hybrid-Decodierer, der die Codierungsschritte des Hybrid-Codierers rückgängig macht.

Ein Verfahren mit den genannten Funktionsmerkmalen ist dem Dokument # 141 des CCITT vom September 1986 entnehmbar (vergleiche CCITT SGXV, Working Party XV/1, Specialist Group on Coding for Visual Telephony, Document # 141, Sept. 12. (1986), Seite 5).

Der Hauptzweck eines Hybrid-Codierers für ein derartiges Verfahren ist der, die von einer Video-Datenquelle kommenden Videodaten möglichst mit geringem Informationsverlust in ein Signal mit möglichst geringer Bitrate umzucodieren.

Bei diesem Vorgang werden zwei Codierungsprinzipien - daher der Name Hybrid-Codierer - angewendet:
das Interframe-Prinzip,
   bei dem die Korrelation zwischen zeitlich aufeinander folgenden Videobildern (diese Bezeichnung wird für Voll- und Teilbilder verwendet) ausgenutzt wird, und
das Intraframe-Prinzip,
   bei dem die Korrelation der Videodaten innerhalb eines Videobildes ausgenutzt wird.

Vor dem eigentlichen Codierungsprozeß ist eine Aufbereitung der Videodaten erforderlich:

Die Videodaten werden in sogenannten Blöcken an den Codierer übergeben. Ein solcher Videodatenblock (im folgenden auch Block oder Datenblock genannt) enthält die Daten bestimmter Bildpunkte eines Videobildes, die als Elemente einer quadratischen Zahlenmatrix aufgefaßt werden. So kann z.B. ein Videodatenblock aus den Chrominanzwerten der ersten acht Bildpunkte der ersten acht Zeilen eines Videobildes bestehen. Jedes Videobild wird in gleichgroße Datenblöcke zerlegt.

In dem bekannten Verfahren werden die 8 x 8 - Videodatenblöcke des ankommenden Videobildes zunächst mit entsprechenden Blöcken des vorangegangenen Bildes verglichen, die in einem Bildspeicher gespeichert sind. Das Ergebnis des Vergleichs - der Ergebnisblock - ist entweder die Differenz der beiden Blöcke oder der Block des ankommenden Videobildes. Auf Einzelheiten wird später eingegangen werden.

Unter dem Block des vorangegangenen Videobildes, der einem Block des ankommenden Videobildes entspricht, wird hier derjenige Block verstanden, der die größte Übereinstimmung mit dem Block des ankommenden Videobildes zeigt.

Es kann derjenige Block des vorangegangenen Videobildes sein, der im Videobild an der gleichen Stelle steht wie der ankommende Block, oder ein Block, der gegenüber der Stelle des ankommenden Blöckes verschoben ist. Der letzte Fall kommt häufig bei Videobildern vor, in denen sich vor einem festen Hintergrund Personen oder Gegenstände bewegen. Die Verschiebung wird durch einen Bewegungsvektor angegeben. Dieser Vektor kann auch der Null-Vektor sein; dann stehen entsprechende Blöcke an gleicher Stelle aufeinanderfolgender Videobilder. Der Ergebnisblock (der Differenzblock oder der ursprüngliche Block) wird sodann einer flächenhaften Fourier-Transformation unterworfen (vergleiche hierzu z.B. die deutsche Patentanmeldung mit dem Aktenzeichen P 36 13 343.4, veröffentlicht am 22/10/87) und anschließend quantisiert. Ist nach der Quantisierung kein Element des Blocks signifikant verschieden von Null, wird er überhaupt nicht übertragen. Liegt mindestens der Wert eines Elementes des Blocks über einer Schwelle, wird eine Huffman-Codierung vorgenommen und die Werte des Blocks als Hauptinformation in einen Pufferspeicher eingeschrieben. Die Daten aufeinanderfolgender Blöcke werden durch ein END-OF-BLOCK-Zeichen getrennt.

In ebenfalls codierter Form wird in den Pufferspeicher folgende sogenannte Nebeninformation (side-information) eingeschrieben:
1. Der Bewegungsvektor hat den Betrag Null oder nicht.
2. Der transformierte und quantisierte Block ist der Differenzblock oder der ursprüngliche Block.
3. Die Hauptinformation besteht nur aus Nullen oder nicht nur aus Nullen.
4. Die Komponenten des Bewegungsvektors.
5. Die Größen der Quantisierungsintervalle des adaptiven Quantisierers.

Haupt- und Nebeninformation der Blöcke werden dann mit zeitlich konstanter Bitrate aus dem Pufferspeicher ausgelesen und an einen Empfänger übertragen, und zwar so, daß der Empfänger mit seinem Hybrid-Decodierer in der Lage ist, die für einen Block anfallenden Informationen wieder in Haupt- und Nebeninformationen zu zerlegen und die einzelnen Codierungsschritte rückgängig zu machen.

Die Blockgröße, also die Anzahl der Bildpunkte, die in einem quadratischen Block zusammengefaßt werden, ist bei der Codierung von Videobildern üblicherweise eine Potenz von zwei. Bedeutung haben bisher Blöcke der Größe 8 x 8 oder 16 x 16 bekommen, also quadratische Blöcke mit Daten von 64 oder 256 Bildpunkten. Es ist unmittelbar einsichtig, daß die Verarbeitungszeit von Blöcken mit der Zahl ihrer Elemente wächst. Bei schnellen Codierern, also solchen, die für hohe Übertragungsbitraten gedacht sind, werden daher große Blöcke wegen der großen Verarbeitungszeit ungünstiger sein als kleinere. Andererseits wird bei kleinen Blöcken das Verhältnis von Haupt- und Nebeninformation zugunsten der Nebeninformation wachsen und damit die Effektivität der Codierung herabgesetzt. Die Blockgröße ist folglich das Ergebnis eines Kompromisses.

Würde man ein Verfahren der eingangs genannten Art bei einer Aufteilung in 8 x 8-Blöcke z.B. für eine Übertragungsbitrate von 64 kbit/s und einer Bildfolgefrequenz von üblicherweise 10 Hz verwenden, so würde die Übertragungsbitrate nicht einmal zur Übertragung der anfallenden Neben-information ausreichen, wie weiter unten plausibel gemacht wird.

In der später veröffentlichten Europäischen Patent Anmeldung EP-A-0 248 711 ist vorgeschlagen worden, die Blockabmessungen zu verkleinern wenn Bewegung in dem Block detektiert wird. Dieser Vorschlag erfordert Transformierung und Quantisierung von Blöcken unterschiedlicher Größe.

Der Erfindung liegt die Aufgabe zugrunde, ein Verfahren mit den eingangs genannten Merkmalen anzugeben, das an Übertragungsbitraten zwischen 64 kbit/s und 2 Mbit/s optimal anpaßbar ist.

Diese Aufgabe wird dadurch gelöst, daß der Hybrid-Codierer mehrere benachbarte Blöcke zu einem Makroblock zusammenfaßt, jedem Makroblock ein Makroattribut zuordnet, das anzeigt, ob genannte Blockattribute für alle Teilblöcke des Makroblocks gelten oder nicht, und die Blockattribute, die für alle Teilblöcke des Makroblocks gelten, nur in der Nebeninformation für das Makroblock überträgt.

Eine Ausgestaltung besteht darin, daß der Hybrid-Codierer einem Makroblock ein gesondertes Makroattribut (NON) dann zuordnet, wenn er alle Nebeninformationen den einzelnen Teilblöcken des Makroblocks zuordnet.

Das erfindungsgemäße Verfahren hat den Vorteil, daß die Codierung auf einfache Weise iterativ erfolgen kann, d.h., daß die in der Lösung als Teilblöcke angesprochenen Bestandteile eines Makroblocks selbst wieder aus noch kleineren Blöcken zusammengesetzt sein können, also selbst Makroblöcke sind. Die Verwendung des gesonderten Makroattributes (NON) bedeutet den vollständigen Wechsel auf die "nächstniedere Codier-Ebene", in der alle Nebeninformationen eines Teilblocks diesem selbst zugeordnet sind. Zu diesen Nebeninformationen kann wieder das gesonderte Attribut NON gehören, was zu einem weiteren Wechsel der "Codier-Ebene" führen würde und so fort. Das erfindungsgemäße System ist z.B. in der Lage, die Codierung zweier aufeinanderfolgender identischer Videobilder in einem einzigen Makroblock vorzunehmen, dessen Hauptinformation nur aus Nullen besteht, wobei die zu übertragende Information im wesentlichen die zuletzt gemachte Aussage ist. Entsprechendes gilt für identische Teile zweier aufeinanderfolgender Videobilder.

Ist die Übertragungsbitrate gering, so läßt sich das Verfahren z.B. dadurch an die Übertragungsbitrate optimal anpassen, indem bei der Codierung überwiegend solche Makroattribute verwendet werden, die bedeuten, daß alle Nebeninformationen der Teilblöcke als identisch angesehen werden. Zur Anpassung an höhere Bitraten wird möglichst oft auf einer möglichst niedrigen Codier-Ebene gearbeitet, z.B. durch möglichst häufige Verwendung des gesonderten Attributes NON.

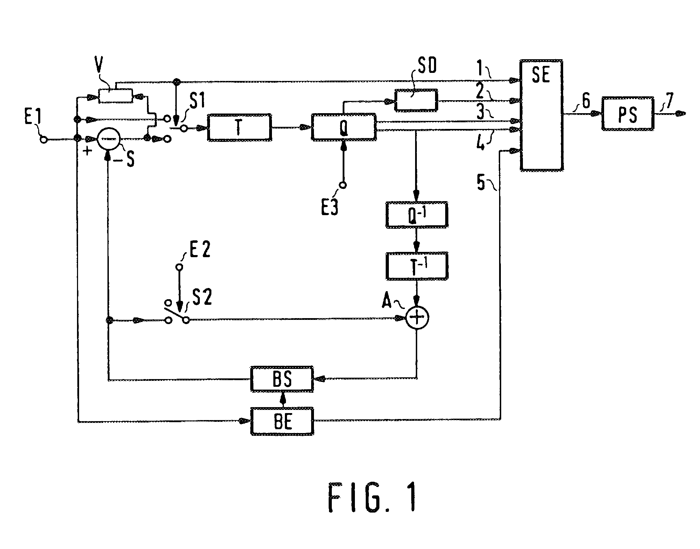

Weitere Ausgestaltungen der Erfindung sind in den Unteransprüchen angegeben. Anhand zweier Ausführungsbeispiele und der Figur 1 soll die Erfindung mit ihren Ausgestaltungen näher erläutert werden.

In den Ausführungsbeispielen wird davon ausgegangen, daß die Codierung höchstens auf zwei "Codier-Ebenen" erfolgt, d.h., daß die als Teilblöcke bezeichneten Bestandteile eines Makroblocks die kleinsten vorkommenden Blöcke sind, die Teilblöcke also nicht aus noch kleineren Blöcken zusammengesetzt sind. Die Menge der Teilblock-Nebeninformationen enthält daher auch nicht das gesonderte Attribut NON, das - wie oben schon erwähnt - einen Übergang in eine nächsttiefere "Codier-Ebene" bedeutet, also einen Übergang zu noch kleineren Blöcken.

Zur Bezeichnung der Attribute eines Teilblocks sollen

folgende Abkürzungen verwendet werden:
a: Der transformierte und quantisierte Teilblock ist der ursprüngliche Block.
a: Der transformierte und quantisierte Teilblock ist nicht der ursprüngliche Block, sondern der Differenzblock.
b: Der Bewegungsvektor hat den Betrag Null.
b: Der Bewegungsvektor hat nicht den Betrag Null.
c: Die Hauptinformation des Teilblocks besteht nur aus Nullen.
c: Die Hauptinformation des Teilblocks besteht nicht nur aus Nullen.

Einen Codierer, dessen kleinste Teilblöcke eine 8 x 8-Blockstruktur haben (der Teilblock ist also quadratisch und enthält 64 Elemente), zeigt Fig. 1. Eine 8 x 8-Blockstruktur haben auch die dem Codierer an einer Klemme E1 zugeführten Eingangsblöcke, die Bestandteil eines ankommenden Videobildes sind. Im folgenden soll die kürzere Bezeichnung "Block" sowohl für die Eingangsblöcke als auch für die Teilblöcke im Sinne der Aufgabenlösung verwendet werden, falls keine Verwechselung zu befürchten ist.

Ein 8 x 8-Block des ankommenden Videobildes wird einem Eingang eines Subtrahierers S zugeführt. Dem anderen Eingang des Subtrahierers S wird der entsprechende Block des vorangegangenen Videobildes zugeführt, das in einem Bildspeicher BS gespeichert ist. Der Differenzblock erscheint am Ausgang des Subtrahierers S; er wird zunächst an einen Eingang eines Vergleichers V geleitet, der den ankommenden Block mit dem Differenzblock vergleicht. Besteht kein wesentlicher Unterschied zwischen den Elementen des ankommenden Blocks und denen des Differenzblocks, so gibt der Vergleicher V über eine Leitung 1 ein Codewort an eine Strukturiereinheit SE ab, durch das der Inhalt des Satzes a (vergleiche oben) codiert wird. Mit diesem Codewort werden auch die beiden steuerbaren Schalter S1 und S2 gesteuert, weil auch der Steuereingang E2 des steuerbaren Schalters S2 mit der Leitung 1 verbunden ist. Der Schalter S1 nimmt dann eine Stellung an, in der der ankommende Block direkt einer Transformationseinheit T zugeführt wird. Der Schalter S2 wird in eine Stellung gebracht, in der die Verbindung zwischen dem Ausgang des Bildspeichers BS und dem Eingang eines Addierers A unterbrochen wird. Ist der Unterschied zwischen dem ankommenden Block und dem Differenzblock signifikant, gibt der Vergleicher V ein Signal mit dem Inhalt a (vergleiche oben) ab, das die steuerbaren Schalter so steuert, daß der Differenzblock der Transformationseinheit T zugeführt wird und die Verbindung zwischen dem Ausgang des Bildspeichers BS und dem erwähnten Eingang des Addierers A wieder hergestellt wird.

Die Transformationseinheit T führt mit den Blöcken eine flächenhafte Fourier-Transformation durch. Die Elemente des transformierten Blockes werden einem Quantisierer Q zugeführt. Die Größe der Quantisierungsintervalle wird durch ein Steuersignal verändert, das an einer Klemme E3 anliegt. Dieses Signal kommt von einem Pufferspeicher PS, und gibt Aufschluß über dessen Füllstand. Droht der Pufferspeicher PS überzulaufen, wird die Länge der Quantisierungsintervalle vergrößert, also eine gröbere Quantisierung gewählt. Bei drohendem Leerlauf des Pufferspeichers PS wird die Quantisierung verfeinert. Der transformierte und quantisierte Block - also die Hauptinformation eines Blocks - wird sodann über eine Leitung 4 ebenfalls der Strukturiereinheit SE zugeführt. Über die Leitung 4 laufen auch Nebeninformationen, die das Ende eines Blocks angeben. Über eine Leitung 3 gelangt die Nebeninformation über die Größe der Quantisierungsintervalle vom Quantisierer Q zur Strukturiereinheit SE. Ein Schwellwertdetektor SD prüft, ob die Elemente eines transformierten und quantisierten Blockes alle unter einer Schwelle liegen oder nicht. Er gibt über eine Leitung 2 das codierte Attribut c oder c (vergleiche oben) an die Einheit SE ab.

Das Signal auf der Leitung 4 wird auch über einen Rückkopplungszweig wieder an den Eingang des Hybrid-Codierers geschleift, und zwar über eine Einheit Q⁻¹, die die Wirkung des Quantisierers Q weitgehend rückgängig macht. Entsprechendes trifft für die Einheit T⁻¹ zu, die der Einheit Q⁻¹ nachgeschaltet ist und die Wirkung der Einheit T rückgängig macht. Der Ausgang der Einheit T⁻¹ ist mit einem Eingang eines Addierers A verbunden, dessen zweiter Eingang über den Schalter S2 mit dem Ausgang des Bildspeichers BS verbindbar ist. Handelt es sich bei dem rückgeschleiften und durch die Einheiten Q⁻¹ und T⁻¹ wieder decodierten Block um einen Differenzblock, so stellt der Schalter S2 die Verbindung zwischen dem Bildspeicher und dem Addierer A her; der Addierer A macht dadurch auch die Differenzbildung rückgängig. Der Block des ankommenden Videobildes wird so über den Rückkopplungszweig in den Bildspeicher BS eingeschrieben und übernimmt dort die Rolle des entsprechenden Blocks des vorangegangenen Videobildes.

Ein Bewegungsschätzer BE, dem ebenfalls die Blöcke des ankommenden Videobildes direkt zugeführt werden, vergleicht diese mit den im Bildspeicher BS gespeicherten Blöcken; er bestimmt denjenigen Block im Bildspeicher (nur bei den Luminanzwerten), der mit dem ankommenden Block die größte Übereinstimmung zeigt und gibt dann über eine Leitung 5 als Nebeninformation ein Codewort mit dem Inhalt des Satzes b oder b (vergleiche oben) an die Strukturiereinheit SE ab. Trifft der Satz b zu, werden auch die Komponenten des Bewegungsvektors über die Leitung 5 an die Strukturiereinheit SE übergeben. Der Bewegungsvektor gibt an, wie Blöcke gleichen Inhaltes zwischen zwei aufeinanderfolgenden Videobildern gegeneinander verschoben sind.

Die Strukturiereinheit SE faßt nun vier 8 x 8-Blöcke, die einen quadratischen Ausschnitt aus einem Videobild darstellen, zu einem Makroblock zusammen, also zu einem 16 x 16-Block. Jedem Makroblock ordnet sie dann ein Makroattribut zu. Zur Beschreibung der Makroattribute werden folgende Abkürzungen eingeführt:
- u:: Alle transformierten und quantisierten Teilblöcke sind Differenzblöcke.
- v:: Für alle vier Teilblöcke hat der Bewegungsvektor den Betrag Null.
- w:: Für alle Teilblöcke besteht die Hauptinformation nur aus Nullen.
- w:: Nicht für alle Teilblöcke besteht die Hauptinformation nur aus Nullen.
- x:: Alle Teilblöcke sind usprüngliche Blöcke.
- y:: Für alle Teilblöcke hat der Bewegungsvektor denselben von Null verschiedenen Betrag.

Im vorliegenden Beispiel werden für Luminanzwerte folgende Makroattribute verwendet:
1. u v w,
2. x,
3. u v w,
4. u y w,
5. u y w.

Dabei bedeutet die Nebeneinanderstellung von Buchstaben die satzlogische Konjunktion ihrer zugehörigen Aussagen. Die Verwendung der Makroattribute 3 und 5 macht es erforderlich, daß auf der nächstniederen Codier-Ebene noch Nebeninformationen unterzubringen sind. Denn es muß erkennbar sein, bei welchem der Teilblöcke die Hauptinformation nur aus Nullen besteht. Verwendet man als diese Teilblock-Nebeninformation das ohnehin schon vorhandene END-OF-BLOCK-Zeichen, dann entfallen gesonderte Vorrichtungen zur Speicherung und zum Einsetzen einer solchen Teilblock-Nebeninformation.

Für Chrominanzwerte sind folgende Makroattribute vorgesehen:
6. u v w,
7. x,
8. u v w.

Da bei den Chrominanzwerten keine Bewegungsschätzung vorgenommen wird, entfallen alle Attribute, bei denen der Bewegungsvektor einen von Null verschiedenen Betrag hat.

In beiden Fällen wird das gesonderte Makroattribut mit NON bezeichnet und dann verwendet, wenn entweder die Makroattribute 1-5 oder die Makroattribute 6-8 nicht verwendet werden. Zur Verwendung von Makroattributen ist folgendes zu sagen:

Ein Makroattribut mit z.B. der Aussage v (vergleiche oben) bedeutet nicht, daß der Bewegungsschätzer BE tatsächlich für alle vier Teilblöcke den Nullvektor als Bewegungsvektor ermittelt hat; vielmehr kann es im Sinne einer - hier nicht näher angebbaren - Optimierung günstiger sein, die Unterschiede zu vernachlässigen und die Teilblöcke so zu behandeln, als hätten sie alle einen Bewegungsvektor mit dem Betrag Null. Diese Entscheidung fällt die Strukturiereinheit SE aufgrund der in ihr gespeicherten Optimierungsprogramme. Ähnlich verhält es sich auch mit anderen Teilaussagen der Makroattribute. Auch das Attribut NON braucht nicht verwendet zu werden, wie weiter unten noch an einem weiteren Beispiel gezeigt wird.

Die Tabelle 1 zeigt eine Codiertabelle, der zu entnehmen ist, mit welchen Codeworten (binär) die Makroinformationen zu codieren sind. Sind im Falle der Luminanzwerte die Bewegungsvektoren für alle Teilblöcke gleich, so werden diese, wie in Tabelle 1 angedeutet,durch ein achtstelliges binäres Codewort dargestellt.

Werden die Makroattribute 3, 5, 8 oder NON verwendet, dann sind Nebeninformationen teilweise oder ausschließlich den Teilblöcken zuzuordnen. Zu diesen Teilblock-Nebeninformationen gehören folgende Teilblock-Attribute:
9. a b c,
10. a,
11. a b c,
12. a b c,
13. a b c.

Für Chrominanzwerte sind die Teilblock-Attribute:
14. a b c,
15. a,
16. a b c
vorgesehen.

Die Nebeneinanderstellung der Buchstaben hat hier die gleiche Bedeutung wie im Falle der Makroattribute. Durch welche Huffman-Codeworte die Teilblock-Attribute zu codieren sind ist der Tabelle 2 entnehmbar. Ist im Falle der Luminanzwerte der Bewegungsvektor eines Teilblocks von Null verschieden, so wird dieser ebenfalls durch ein 8-stelliges Binärwort übertragen.

Verwendet man wie oben angedeutet als Teilblock-Attribut das ohnehin schon vorhandene END-OF-BLOCK-Zeichen, so reduziert sich die Anzahl der noch anzugebenden Teilblock-Nebenattribute auf die Aussagen a, a b c und a b c im Falle der Luminanzwerte und auf die zusätzlichen Teilblock-Attribute a und a b c im Falle der Chrominanzwerte. Welche Huffman-Codeworte in diesem Falle zu verwenden sind, ist der Tabelle 3 zu entnehmen. Sind einem Teilblock die Komponenten eines Bewegungsvektors zuzuordnen, dann werden diese wiederum durch ein 8-stelliges Binärcodewort codiert.

Das nun folgende Ausführungsbeispiel behandelt einen Fall, in dem das gesonderte Makroattribut NON nicht verwendet wird. Zunächst soll jedoch die Wirksamkeit eines erfindungsgemäßen Systems gegenüber einem System mit fester Blockstruktur aufgezeigt werden.

Die Tabelle 4 zeigt Daten eines willkürlich herausgegriffenen Videobildes, das aus 288 Zeilen und 352 Spalten, also insgesamt 101 376 Bildpunkten besteht. Die Luminanzwerte werden in 1 584 quadratische Blöcke zu je 64 Bildpunkte zerlegt und die Chrominanzwerte in 792 Blöcke der gleichen Größe. Für die Attribute solcher 8 x 8-Blöcke sollen die gleichen Abkürzungen verwendet werden wie für die Teilblöcke des ersten Ausführungsbeispieles.

Eine Nebeninformation, die mit einem Block übertragen werden muß, besteht wiederum aus der satzlogischen Konjunktion der im ersten Beispiel aufgezählten Attribute für einen Teilblock. Zur Kennzeichnung einer solchen Information sind die Symbole für die einzelnen Attribute in Spalte 1 der Tabelle 4 nebeneinandergestellt. So bedeutet z.B. die Angabe a b c, daß der Block, der mit dieser Nebeninformation versehen wird, der Differenzblock zweier aufeinanderfolgender Bilder ist, sein Bewegungsvektor den Betrag Null hat und die Hauptinformation des Blockes nicht nur aus Nullen besteht.

Die zweite Spalte in Tabelle 4 gibt an, wieviele Blöcke eines Bildes mit der in Spalte 1 stehenden Nebeninformation übertragen worden sind, und die dritte Spalte gibt an, durch welches Codewort die Nebeninformation codiert worden ist.

Für die Chrominanzwerte wird kein Bewegungsvektor bestimmt, deshalb kommen nur Nebeninformationen vor, die das Attribut b enthalten. In der letzten Zeile über die Angaben der Luminanzwerte der Tabelle 4 ist auch als Nebeninformation der Bewegungsvektor aufgeführt. Die Zahl der Blöcke (Spalte 2), für die der Bewegungsvektor nicht Null ist, ist die Summe der Anzahl der Blöcke, die das Attribut b enthalten. Die beiden Komponenten des Bewegungsvektors werden zusammen durch 8 Bit codiert, wie Spalte 3 zu entnehmen ist; das führt insgesamt zu 3 152 Bits für die Bewegungsvektoren des herausgegriffenen Videobildes.

In der letzten Zeile der Tabelle 4 ist die Gesamtzahl der Bits aufgeführt, die zur Codierung der oben aufgezählten Nebeninformation nötig ist. Das Ergebnis (letzte Zeile, vierte Spalte) zeigt, daß die Zahl der Bits, die pro Sekunde allein für die in Tabelle 4 genannten Nebeninformationen anfällt, größer ist als die unterstellte Übertragungsbitrate von 64 kbit/s. Diese Aussage basiert auf der Annahme, daß die Bildfolgefrequenz 10 Hz beträgt und die in der Tabelle 4 angegebene Gesamtzahl der Bits typisch ist für alle Videobilder.

Die Aussagen der Tabelle 4 führen zu der unausweichlichen Schlußfolgerung, daß ein Hybrid-Codierer bei einer Bildfolgefrequenz von 10 Hz und bei der Verwendung von 8 x 8-Blöcken für Übertragungsbitraten von 64 kbit/s nicht brauchbar ist, weil keine Hauptinformation mehr übertragen werden kann. Denn in Spalte 4, letzte Zeile der Tabelle 4, ist angegeben, daß die pro Videobild anfallenden Nebeninformationen in der Größenordnung von 6 800 Bits liegen; darin sind noch nicht einmal die Nebeninformationen enthalten, die das Ende eines Blocks und die Größe der Quantisierungsintervalle angeben. Schon für alle Nebeninformationen zusammen würde eine Bitrate von 64 kbit/s nicht ausreichen.

Wird jedoch erfindungsgemäß auf zwei "Codier-Ebenen" gearbeitet, so faßt die Strukturiereinheit SE vier 8 x 8-Blöcke, die einen quadratischen Ausschnitt aus einem Videobild darstellen, zu einem Makroblock zusammen. Aus dem Bewegungsvektor der Teilblöcke eines Makroblocks bestimmt sie einen mittleren Bewegungsvektor und ordnet diesen dem Makroblock zu. Sodann prüft sie, welche der folgenden Aussagen für einen Makroblock (Makroattribute) zutreffen:
- u:: Alle transformierten und quantisierten Teilblöcke sind Differenzblöcke.
- u:: Nicht alle transformierten und quantisierten Teilblöcke sind Differenzblöcke, sondern mindestens einer ist der ursprüngliche Block.
- v:: Für alle Teilblöcke hat der Bewegungsvektor den Betrag Null.
- v:: Nicht für alle Teilblöcke hat der Bewegungsvektor den Betrag Null.
- w:: Für alle Teilblöcke besteht die Hauptinformation nur aus Nullen.
- w:: Nicht für alle Teilblöcke besteht die Hauptinformation nur aus Nullen.

Diese Makroattribute - sie sind als Menge nicht identisch mit den Makroattributen des ersten Ausführungsbeispieles - lassen sich zu insgesamt acht einander ausschließenden Makro-Nebeninformationen der Form u v w (vergleiche oben) kombinieren. Jeder Kombination ordnet die Struktureinheit ein Codewort zu, das beim Einschreiben aller Informationen über die Leitung 6 in den Pufferspeicher PS den vier Teilblöcken eines Makroblockes vorangestellt ist. Die verwendeten Codeworte sind der Tabelle 5 zu entnehmen; die Tabelle 5 zeigt auch, daß nicht alle Kombinationen der Form u v w zu einem unterschiedlichen Codewort führen. Der Grund wird später ersichtlich werden. Wichtig ist, daß der Empfänger, dem alle Informationen über die Leitung 7 in der Fig. 1 übertragen werden, jedem 8 x 8-Block eine der in Tabelle 4 angegebenen Teilblock-Nebeninformationen zuordnen kann. Lautet die Makro-Nebeninformation z.B. u v w, gehört zu jedem Teilblock die gleiche Teilblock-Nebeninformation, nämlich a b c.

Lautet die Makro-Nebeninformation jedoch u v w, wird jedem Teilblock noch eine Nebeninformation mit dem Inhalt des Satzes c oder c vorangestellt, damit eindeutig ist, welchem Teilblock welche Teilblock-Nebeninformation zuzuordnen ist.

Im vorliegenden Ausführungsbeispiel ist die Angabe von Komponenten des Bewegungsvektors immer eine Makro-Information. Der Empfänger ordnet also jedem Teilblock eines Makroblockes den gleichen Bewegungsvektor zu. Das führt zwar zu einem geringen Qualitätsverlust bei der Bildwiedergabe auf der Empfängerseite, reduziert jedoch die Zahl der zu übertragenden Bits für die Bewegungsvektoren eines Videobildes ganz erheblich, wie der Vergleich der siebten Zeile der Tabelle 5 mit der entsprechenden Zeile der Tabelle 4 zeigt. Die Angaben, die noch als Teilblock-Nebeninformation jedem Teilblock bei der Übertragung vorangestellt werden, erfordern höchstens zwei Bit. Die bitsparende Codierung nach der Erfindung ist der Tabelle 5 zu entnehmen. Für die Nebeninformationen der Luminanzwerte eines willkürlich herausgegriffenen Videobildes sind ohne die Komponenten der Bewegungsvektoren 867 Bits erforderlich, mit den Komponenten der Bewegungsvektoren 1 731.

Die gesamte Nebeninformation der Chrominanzwerte erfordert, wie Tabelle 5 zeigt, 379 Bits. Die letzte Zeile der Tabelle 5 zeigt, daß bei einem System nach der Erfindung für Nebeninformationen etwa 1/3 der Anzahl der Bits erforderlich ist wie bei einem System, bei dem die Codierung nach Tabelle 4 erfolgt.

Die Tabelle 5 zeigt ebenfalls, daß nicht für alle Makro-Nebeninformationen unterschiedliche Codeworte vorgesehen sind. Aus statistischen Gründen ist in drei Fällen die Unterscheidung, ob bei allen vier Teilblöcken die Hauptinformation nur aus Nullen besteht (w) oder nicht (w) nicht vorgenommen worden. Es ist günstiger, d.h., es erfordert im Mittel weniger Bits, diese Unterscheidung auf der "Mikro-Ebene" vorzunehmen und jedem Teilblock eine Mikro-Nebeninformation mit dem Inhalt des Satzes c (vergleiche oben) oder c voranzustellen.

Aus den gleichen Gründen wurden Makroattribute wie z.B. "Alle vier Teilblöcke sind ursprüngliche Blöcke" nicht verwendet.

**Tabelle 1**

| **Luminanzwerte** | |
|---|---|
| Makro-Nebeninformation | Codewort (binär) |
| u v w | 0 |
| x | 11110 |
| u v w | 110 |
| u y w | 1110 |
| u y w | 10 |
| NON | 11111 |
| Komponenten des Beweg.-vektors | xxx xxx xx |

| **Chrominanzwerte** | |
|---|---|
| u v w | 0 |
| x | 110 |
| u v w | 10 |
| NON | 111 |

**Tabelle 2**

| **Luminanzwerte** | |
|---|---|
| Teilblock-Nebeninformation | Codewort (binär) |
| a b c | 0 |
| a | 1110 |
| a b c | 1111 |
| a b c | 10 |
| a b c | 110 |
| Komponenten des Beweg.-vektors | xxx xxx xx |

| **Chrominanzwerte** | |
|---|---|
| a b c | 0 |
| a | 11 |
| a b c | 10 |

**Tabelle 3**

| **Luminanzwerte** | |
|---|---|
| Teilblock-Nebeninformation | Codewort (binär) |
| a | 11 |
| a b c | 0 |
| a b c | 10 |
| Komponenten des Beweg.-vektors | xxx xxx xx |

| **Chrominanzwerte** | |
|---|---|
| a | 1 |
| a b c | 0 |

**Tabelle 4**

| **Luminanzwerte** | | | |
|---|---|---|---|
| Nebeninformation | Anzahl der Blöcke | Codewort (binär) | Anzahl der Bits für Nebeninformation |
| a | 56 | 0000 | 224 |
| a b c | 1123 | 1 | 1123 |
| a b c | 11 | 001 | 33 |
| a b c | 327 | 0001 | 1308 |
| a b c | 67 | 01 | 134 |
| Kromponenten des Beweg.-vektors | 394 | xxxxxxxx | 3152 |
| Zwischen-summe | | | 5974 |

| **Chrominanzwerte** | | | |
|---|---|---|---|
| a | 13 | 10 | 26 |
| a b c | 752 | 1 | 752 |
| a b c | 27 | 10 | 54 |
| Summe | | | 6806 |

**Tabelle 5**

| **Luminanzwerte** | | |
|---|---|---|
| Makro-Nebeninformation | Codewort (binär) | Anzahl der Bits für Nebeninformation der Makro- und Teilblöcke |
| u v w | 0 | 867 |
| u v w | 101 | |
| u v w | 100 | |
| u v w | | |
| u v w | 110 | |
| u v w | | |
| u v w | 111 | |
| u v w | | |
| Komponenten des Beweg.- vektors | xxx xxx xx | 864 |
| Zwischensumme | | 1 731 |

| **Chrominanzwerte** | | |
|---|---|---|
| u w | 0 | 379 |
| u w | 10 | |
| u w | 11 | |
| Summe | | 2 110 |

## Patentansprüche

1. Verfahren zur Übertragung von Videobildern mit einem Hybrid-Codierer zur blockweisen Codierung der Daten eines ankommenden Videobildes, wobei:
in einem Bildspeicher (BS) des Hybrid-Codierers die Daten des vorangegangenen Videobildes gespeichert sind,
das gespeicherte Videobild und das ankommende Videobild blockweise subtrahiert (S) werden um Differenzblöcke zu bilden,
die Blöcke des ankommenden Videobildes oder des Differenzbildes transformiert (T) und quantisiert (Q) werden zur Bildung von Hauptinformation,
für die zu codierenden Blöcke ein Bewegingsvektor ermittelt wird (BE),
für jeden zu codierenden Block Nebeninformation über folgende Blockattribute gebildet wird:
a) der transformierte und quantisierte Block ist der Differenzblock oder der Block des ankommenden Videobildes (1),
b) der Bewegungsvektor hat den Betrag Null oder nicht (5),
c) die Hauptinformation besteht nur aus Nullen oder nicht nur aus Nullen (2),
und mit einem Hybrid-Decodierer, der die Codierungsschritte des Hybrid-Codierers rückgängig macht,
dadurch gekennzeichnet, daß der Hybrid-Codierer:
mehrere benachbarte Blöcke zu einem Makroblock zusammenfaßt,
jedem Makroblock ein Makroattribut zuordnet, das anzeigt, ob genannte Blockattribute für alle Teilblöcke des Makroblocks gelten oder nicht, und
die Blockattribute, die für alle Teilblöcke des Makroblocks gelten, nur in der Nebeninformation für das Makroblock überträgt.

2. Verfahren nach Anspruch 1, dadurch gekennzeichnet, daß der Hybrid-Codierer einem Makroblock ein gesondertes Makroattribut (NON) dann zuordnet, wenn er alle Nebeninformationen den einzelnen Teilblöcken des Makroblocks zuordnet.

3. Verfahren nach Anspruch 1 oder 2, dadurch gekennzeichnet, daß für Luminanzwerte folgende Makroattribute vorgesehen sind:
1. u v w,
2. x,
3. u v w,
4. u y w,
5. u y w,
wobei die Buchstaben u, v, w, x und y stellvertretend für folgende Aussagen stehen:
u: alle Teilblöcke sind Differenzblöcke,
v: für alle Teilblöcke hat der Bewegungsvektor den Betrag Null,
w: für alle Teilblöcke besteht die Hauptinformation nur aus Nullen,
x: alle Teilblöcke sind Blöcke des ankommenden Videobildes,
y: für alle Teilblöcke hat der Bewegungsvektor denselben von Null verschiedenen Betrag,
und die unterstrichenen Buchstaben die Negation und die Nebeneinanderstellung von Buchstaben die logische Konjunktion ihrer zugehörigen Aussagen bedeuten.

4. Verfahren nach Anspruch 1 oder 2, dadurch gekennzeichnet, daß für Chrominanzwerte folgende Makroattribute vorgesehen sind:
6. u v w,
7. x,
8. u v w,
wobei die Buchstaben u, v, w, x und y stellvertretend für folgende Aussagen stehen:
u: alle Teilblöcke sind Differenzblöcke,
v: für alle Teilblöcke hat der Bewegungsvektor den Betrag Null,
w: für alle Teilblöcke besteht die Hauptinformation nur aus Nullen,
x: alle Teilblöcke sind Blöcke des ankommenden Videobildes,
und die unterstrichenen Buchstaben die Negation und die Nebeneinanderstellung von Buchstaben die logische Konjunktion ihrer zugehörigen Aussagen bedeuten.

5. Verfahren nach einem der vorhergehenden Ansprüche, dadurch gekennzeichnet, daß als Nebeninformation für Teilblöcke das END-OF-BLOCK Zeichen dann verwendet wird, wenn die Hauptinformation eines Teilblocks nur aus Nullen besteht.

6. Verfahren nach einem der vorhergehenden Ansprüche, dadurch gekennzeichnet, daß der Hybrid-Codierer den Bewegungsvektor nur für Makroblöcke bestimmt.

7. Verfahren nach einem der vorhergehenden Ansprüche, dadurch gekennzeichnet, daß der Hybrid-Codierer Makroattribute, die anzeigen, daß Nebeninformationen für alle Teilblöcke eines Makroblocks gelten, nur dann verwendet, wenn deren Verwendung zu einer geringeren Anzahl von Bits für die Nebeninformationen führen würde, als wenn der Hybrid-Codierer jedem Teilblock Nebeninformationen gleichen Inhalts zuordnen würde.

8. Verfahren nach einem der vorhergehenden Ansprüche, dadurch gekennzeichnet, daß der Hybrid-Codierer Makroblöcke wie Teilblöcke behandelt.

9. Verfahren nach einem der vorhergehenden Ansprüche, dadurch gekennzeichnet, daß der Hybrid-Decodierer die Makroattribute verwendet um jedem Teilblock die angegebene Teilblock-Nebeninformation zuzuordnen.

10. Hybrid-Codierer zur blockweisen Codierung der Daten eines ankommenden Videobildes, mit:
einem Bildspeicher (BS) zur Speicherung der Daten eines vorangegangenen Videobildes,
einem Subtrahierer (S) zur Bildung von Differenzblöcken aus dem gespeicherten Videobild und dem ankommenden Videobild,
Mitteln zum Transformieren (T) und Quantisieren (Q) der Blöcke des ankommenden Videobildes oder des Differenzbildes, wobei die Elemente des transformierten und quantisierten Blockes Hauptinformation bilden,
Mitteln (BE) um für die zu codierenden Blöcke einen Bewegingsvektor zu ermitteln,
Mitteln (V,BE,SD) um für jeden zu codierenden Block Nebeninformation zu bilden über folgende Blockattribute:
a) der transformierte und quantisierte Block ist der Differenzblock oder der Block des ankommenden Videobildes,
b) der Bewegungsvektor hat den Betrag Null oder nicht,
c) die Hauptinformation besteht nur aus Nullen oder nicht nur aus Nullen,
dadurch gekennzeichnet, daß der Hybrid-Codierer mit Strukturmitteln (SE) versehen ist um:
mehrere benachbarte Blöcke zu einem Makroblock zusammenzufassen,
jedem Makroblock ein Makroattribut zuzuordnen, das anzeigt, ob genannte Blockattribute für alle Teilblöcke des Makroblocks gelten oder nicht, und
die Blockattribute, die für alle Teilblöcke des Makroblocks gelten, nur in der Nebeninformation für das Makroblock zu übertragen.

11. Hybrid-Codierer nach Anspruch 10, dadurch gekennzeichnet, daß die Strukturmittel (SE) einem Makroblock ein gesondertes Makroattribut (NON) dann zuordnen, wenn sie alle Nebeninformationen den einzelnen Teilblöcken des Makroblockes zuordnen.

12. Hybrid-Codierer nach Anspruch 10 oder 11, dadurch gekennzeichnet, daß für Luminanzwerte folgende Makroattribute vorgesehen sind:
1. u v w,
2. x,
3. u v w,
4. u y w,
5. u y w,
wobei die Buchstaben u, v, w, x und y stellvertretend für folgende Aussagen stehen:
u: alle Teilblöcke sind Differenzblöcke,
v: für alle Teilblöcke hat der Bewegungsvektor den Betrag Null,
w: für alle Teilblöcke besteht die Hauptinformation nur aus Nullen,
x: alle Teilblöcke sind Blöcke des ankommenden Videobildes,
y: für alle Teilblöcke hat der Bewegungsvektor denselben von Null verschiedenen Betrag,
und die unterstrichenen Buchstaben die Negation und die Nebeneinanderstellung von Buchstaben die logische Konjunktion ihrer zugehörigen Aussagen bedeuten.

13. Hybrid-Codierer nach Anspruch 10 oder 11, dadurch gekennzeichnet, daß für Chrominanzwerte folgende Makroattribute vorgesehen sind:
6. u v w,
7. x,
8. u v w,
wobei die Buchstaben u, v, w, x und y stellvertretend für folgende Aussagen stehen:
u: alle Teilblöcke sind Differenzblöcke,
v: für alle Teilblöcke hat der Bewegungsvektor den Betrag Null,
w: für alle Teilblöcke besteht die Hauptinformation nur aus Nullen,
x: alle Teilblöcke sind Blöcke des ankommenden Videobildes,
und die unterstrichenen Buchstaben die Negation und die Nebeneinanderstellung von Buchstaben die logische Konjunktion ihrer zugehörigen Aussagen bedeuten.

14. Hybrid-Codierer nach einem der Ansprüche 10-13, dadurch gekennzeichnet, daß als Nebeninformation für Teilblöcke das END-OF-BLOCK Zeichen dann verwendet wird, wenn die Hauptinformation eines Teilblocks nur aus Nullen besteht.

15. Hybrid-Codierer nach einem der Ansprüche 10-14, dadurch gekennzeichnet, daß der Hybrid-Codierer den Bewegungsvektor nur für Makroblöcke bestimmt.

16. Hybrid-Codierer nach einem der Ansprüche 10-15, dadurch gekennzeichnet, daß die Strukturmittel Makroattribute, die anzeigen, daß Nebeninformationen für alle Teilblöcke eines Makroblocks gelten, nur dann verwenden, wenn deren Verwendung zu einer geringeren Anzahl von Bits für die Nebeninformationen führen würde, als wenn der Hybrid-Codierer jedem Teilblock Nebeninformationen gleichen Inhalts zuordnen würde.

17. Hybrid-Codierer nach einem der Ansprüche 10-16, dadurch gekennzeichnet, daß der Hybrid-Codierer Makroblöcke wie Teilblöcke behandelt.

18. Hybrid-Decodierer zur Decodierung von Videobildern, welche codiert worden sind mit die Codierungsschritte des Verfahrens nach einem der Ansprüche 1-8, dadurch gekennzeichnet, daß der Hybrid-Decodierer die Makroattribute verwendet um jedem Teilblock die angegebene Teilblock-Nebeninformation zuzuordnen.

## Claims

1. A methode of transmitting video pictures by means of a hybrid encoder for encoding the data of an incoming video picture in blocks, the data of the previous video picture are stored in a picture memory (BS) of the hybrid encoder,
the stored video picture and the incoming video picture are subtracted (S) blockwise so as to form difference blocks,
the blocks of the incoming video picture or the difference picture are transformed (T) and quantized (Q) so as to form main information,
a motion vector is determined (BE) for the blocks to be encoded,
side information about the following block attributes is formed for each block to be encoded:
a) the transformed and quantized block is the difference block or the original block of the incoming video picture (1),
b) the motion vector is zero or not zero (5),
c) the main information consists of zeros only or does not consist of zeros only (2),
and by means of a hybrid decoder for performing operations reverse to the encoding steps of the hybrid encoder, characterized in that the hybrid encoder:
combines a plurality of adjacent blocks to a macro-block,
assigns a macro-attribute to each macro-block indicating whether said block attributes apply or do not apply to all sub-blocks of the macro-block, and
transmits the block attributes which apply to all sub-blocks of the macro-block only in the side information for the macro-block.

2. A method as claimed in Claim 1, characterized in that the hybrid encoder assigns a separate macro-attribute (NON) to a macroblock when it assigns all side information to the separate sub-blocks of the said macro-block.

3. A method as claimed in Claim 1 or 2, characterized in that the following macro-attributes are provided for luminance values:
1. u v w,
2. x,
3. u v w,
4. u y w,
5. u y w,
in which the characters u, v, w, x and y represent the following records:
u: All sub-blocks are difference blocks,
v: The motion vector is zero for all sub-blocks,
w: The main information consists of zeros only for all sub-blocks,
x: All sub-blocks are blocks of the incoming video picture,
y: The motion vector has the same value different from zero for all sub-blocks,
the underlined characters being the negation and the juxtaposition of characters representing the logical conjunction of their associated records.

4. A method as claimed in Claim 1 or 2, characterized in that the following macro-attributes are provided for chrominance values:
6. u v w,
7. x,
8. u v w,
in which the characters u, v, w, x and y represent the following records:
u: All sub-blocks are difference blocks,
v: The motion vector is zero for all sub-blocks,
w: The main information consists of zeros only for all sub-blocks,
x: All sub-blocks are blocks of the incoming video picture,
the underlined characters being the negation and the juxtaposition of characters representing the logical conjunction of their associated records.

5. A method as claimed in any one of the preceding Claims, characterized in that the END-OF-BLOCK symbol is used as side information for sub-blocks if the main information of a sub-block consists of zeros only.

6. A method as claimed in any one of the preceding Claims, characterized in that the hybrid encoder determines the motion vector for macro-blocks only.

7. A method as claimed in any one of the preceding Claims, characterized in that macro-attributes, indicating that side information applies to all sub-blocks of a macro-block, are only used by the hybrid encoder if their use leads to a smaller number of bits for the side information as compared with the case in which the hybrid encoder would assign side information of the same content to each sub-block.

8. A method as claimed in any one of the preceding Claims, characterized in that the hybrid encoder treats macro-blocks like sub-blocks.

9. A method as claimed in any one of the preceding Claims, characterized in that the hybrid decoder uses the macro-attributes to assign the indicated sub-block side information to each sub-block.

10. A hybrid encoder for encoding the data of an incoming video picture in blocks, comprising:
a picture memory (BS) for storing the data of a previous video picture,
a subtracter (S) for forming difference blocks from the stored video picture and the incoming video picture,
means for transforming (T) and quantizing (Q) the blocks of the incoming video picture or of the difference picture, in which the pixels of the transformed and quantized block constitute main information,
means (BE) for determining a motion vector for the blocks to be encoded,
means (V,BE,SD) for forming side information about the following block attributes for each block to be encoded:
a) the transformed and quantized block is the difference block or the block of the incoming video picture,
b) the motion vector is zero or not zero,
c) the main information consists of zeros only or does not consist of zeros only,
characterized in that the hybrid encoder comprises structural means (SE) for:
combining a plurality of adjacent blocks to a macro-block,
assigning a macro-attribute to each macro-block indicating whether said block attributes apply or do not apply to all sub-blocks of the macro-block, and
transmitting the block attributes which apply to all sub-blocks of the macro-block only in the side information for the macro-block.

11. A hybrid encoder as claimed in Claim 10, characterized in that the structural means (SE) assign a separate macro-attribute (NON) to a macro-block when they assign all side information to the separate sub-blocks of the macro-block.

12. A hybrid encoder as claimed in Claim 10 or 11, characterized in that the following macro-attributes are provided for luminance values:
1. u v w,
2. x,
3. u v w,
4. u y w,
5. u y w,
in which the characters u, v, w, x and y represent the following records:
u: All sub-blocks are difference blocks,
v: The motion vector is zero for all sub-blocks,
w: The main information consists of zeros only for all sub-blocks,
x: All sub-blocks are blocks of the incoming video picture,
y: The motion vector has the same value different from zero for all sub-blocks,
the underlined characters being the negation and the juxtaposition of characters representing the logical conjunction of their associated records.

13. A hybrid encoder as claimed in Claim 10 or 11, characterized in that the following macro-attributes are provided for chrominance values:
6. u v w,
7. x,
8. u v w,
in which the characters u, v, w, x and y represent the following records:
u: All sub-blocks are difference blocks,
v: The motion vector is zero for all sub-blocks,
w: The main information consists of zeros only for all sub-blocks,
x: All sub-blocks are blocks of the incoming video picture,
y: The motion vector has the same value different from zero for all sub-blocks,
the underlined characters being the negation and the juxtaposition of characters representing the logical conjunction of their associated records.

14. A hybrid encoder as claimed in any one of Claims 10 to 13, characterized in that the END-OF-BLOCK symbol is used as side information for sub-blocks if the main information of a sub-block consists of zeros only.

15. A hybrid encoder as claimed in any one of Claims 10 to 14, characterized in that the hybrid encoder determines the motion vector for macro-blocks only.

16. A hybrid encoder as claimed in any one of Claims 10 to 15, characterized in that the structural means use macro-attributes indicating that side information applies to all sub-blocks of a macro-block only if their use leads to a smaller number of bits for the side information as compared with the case in which the hybrid encoder would assign side information of the same content to each sub-block.

17. A hybrid encoder as claimed in any one of Claims 10 to 16, characterized in that the hybrid encoder treats macro-blocks like sub-blocks.

18. A hybrid decoder for decoding video pictures which have been encoded by means of the encoding steps of the method as claimed in any one of Claims 1-8, characterized in that the hybrid decoder uses the macro-attributes to assign the indicated sub-block side information to each sub-block.

## Revendications

1. Procédé pour la transmission d'images vidéo utilisant un codeur hybride pour le codage par blocs des données d'une image vidéo arrivante, dans lequel les données de l'image vidéo précédente sont stockées dans une mémoire d'image (BS) du codeur hybride, l'image vidéo stockée et l'image vidéo arrivante sont soustraites (S) l'une de l'autre par blocs pour former des blocs de différence, les blocs de l'image vidéo arrivante ou de l'image de différence sont transformés (T) et quantifiés (Q) pour la formation de l'information principale, un vecteur de mouvement (BE) est déterminé pour les blocs à coder et de l'information auxiliaire concernant les attributs de blocs suivants est formée pour chaque bloc à coder :
a) le bloc transformé et quantifié est le bloc de différence ou le bloc de l'image vidéo (1) arrivante;
b) le vecteur de mouvement a la valeur zéro ou non (5);
c) l'information principale est constituée uniquement de zéros ou pas uniquement de zéros (2);
et utilisant un décodeur hybride qui annule les pas de codage du codeur hybride, caractérisé en ce que le codeur hybride rassemble plusieurs blocs voisins en un macrobloc, associe à chaque macrobloc un macroattribut qui indique si les attributs de blocs cités sont valables pour tous les blocs partiels du macrobloc ou non et ne transmet les attributs de blocs, qui sont valables pour tous les blocs partiels du macrobloc, que dans l'information auxiliaire pour le macrobloc.

2. Procédé suivant la revendication 1, caractérisé en ce que le codeur hybride associe un macroattribut (NON) distinct à un macrobloc lorsqu'il associe toutes les informations auxiliaires aux blocs partiels distincts du macrobloc.

3. Procédé suivant la revendication 1 ou 2, caractérisé en ce que pour les valeurs de luminance, les macroattributs suivants sont prévus :
1. u v w,
2. x,
3. u v w,
4. u y w,
5. u y w,
où les lettres u, v, w, x et y remplacent les propositions suivantes :
u : tous les blocs partiels transformés et quantifiés sont des blocs de différence;
v : pour tous les blocs partiels, le vecteur de mouvement a la valeur zéro;
w : pour tous les blocs partiels l'information principale est constituée exclusivement de zéros;
x : tous les blocs partiels sont des blocs de l'image vidéo arrivante;
y : pour tous les blocs partiels, le vecteur de mouvement présente la même valeur absolue différente de zéro,
et les lettres soulignées représentent la négation des propositions associées, tandis que la juxtaposition des lettres signifie leur conjonction logique.

4. Procédé suivant la revendications 1 ou 2, caractérisé en ce que, pour les valeurs de chrominance, les macroattributs suivants sont prévus :
6. u v w,
7. x,
8. u v w,
où les lettres u, v, w, x et y remplacent les propositions suivantes :
u : tous les blocs partiels sont des blocs de différence;
v : pour tous les blocs partiels, le vecteur de mouvement a la valeur zéro;
w : pour tous les blocs partiels, l'information principale est constituée exclusivement de zéros;
x : tous les blocs partiels sont des blocs de l'image vidéo arrivante,
et les lettres soulignées signifient la négation des propositions qui y sont associées, tandis que la juxtaposition de lettres indique leur conjonction logique.

5. Procédé suivant l'une quelconque des revendications précédentes, caractérisé en ce qu'en tant qu'information auxiliaire pour des blocs partiels le signe END-OF-BLOCK est utilisé lorsque l'information principale d'un bloc partiel est constituée exclusivement de zéros.

6. Procédé suivant l'une quelconque des revendications précédentes, caractérisé en ce que le codeur hybride ne détermine le vecteur de mouvement que pour des macroblocs.

7. Procédé suivant l'une quelconque des revendications précédentes, caractérisé en ce que le codeur hybride n'utilise des macroattributs qui indiquent que les informations auxiliaires sont valables pour tous les blocs partiels d'un macrobloc que lorsque leur utilisation mènerait à un plus petit nombre de bits pour les informations auxiliaires que dans le cas où le codeur hybride associerait à chaque bloc partiel des informations auxiliaires de même contenu.

8. Procédé suivant l'une quelconque des revendications précédentes, caractérisé en ce que le codeur hybride traite les macroblocs comme des blocs partiels.

9. Procédé suivant l'une quelconque des revendications précédentes, caractérisé en ce que le décodeur hybride utilise les macroattributs pour associer à chaque bloc partiel l'information auxiliaire de bloc partiel indiquée.

10. Codeur hybride pour le codage par blocs des données d'une image vidéo arrivante comportant :
une mémoire d'image (BS) pour le stockage des données d'une image vidéo précédente;
un soustracteur (S) pour la formation de blocs de différence à partir de l'image vidéo stockée et de l'image vidéo arrivante;
des moyens pour transformer (T) et quantifier (Q) les blocs de l'image vidéo arrivante ou de l'image de différence, les éléments du bloc transformé et quantifié formant l'information principale;
des moyens (BE) pour déterminer un vecteur de mouvement pour les blocs à coder;
des moyens (V, BE, SD) pour former pour chaque bloc à coder de l'information auxiliaire à propos des attributs de blocs suivants :
a) le bloc transformé et quantifié est le bloc de différence ou le bloc de l'image vidéo arrivante;
b) le vecteur de mouvement a la valeur absolue zéro ou non;
c) l'information principale est constituée exclusivement de zéros ou pas exclusivement de zéros;
caractérisé en ce que le codeur hybride est pourvu de moyens de structuration (SE) pour :
rassembler plusieurs blocs voisins en un macrobloc;
associer à chaque macrobloc un macroattribut qui indique si les attributs de blocs mentionnés sont valables pour tous les blocs partiels du macrobloc ou non, et
ne transmettre les attributs de blocs qui sont valables pour tous les blocs partiels du macrobloc que dans l'information auxiliaire pour ce macrobloc.

11. Codeur hybride suivant la revendication 10, caractérisé en ce que les moyens de structuration (SE) associent un macroattribut (NON) distinct à un macrobloc lorsqu'ils associent toutes les informations auxiliaires aux blocs partiels individuels du macrobloc.

12. Codeur hybride suivant la revendication 10 ou 11, caractérisé en ce que pour les valeurs de luminance, les macroattributs suivants sont prévus :
1. u v w,
2. x,
3. u v w,
4. u y w,
5. u y w,
où les lettres u, v, w, x et y remplacent les propositions suivantes :
u : tous les blocs partiels transformés et quantifiés sont des blocs de différence;
v : pour les quatre blocs partiels, le vecteur de mouvement a la valeur zéro;
w : pour tous les blocs partiels l'information principale est constituée exclusivement de zéros;
x : tous les blocs partiels sont des blocs de l'image vidéo arrivante;
y : pour tous les blocs partiels, le vecteur de mouvement présente la même valeur absolue différente de zéro,
et les lettres soulignées représentent la négation des propositions associées, tandis que la juxtaposition de lettres signifie leur conjonction logique.

13. Codeur hybride suivant la revendication 10 ou 11, caractérisé en ce que pour les valeurs de chrominance les macroattributs suivants sont prévus :
6. u v w,
7. x,
8. u v w,
où les lettres u, v, w, x et y remplacent les propositions suivantes :
u : tous les blocs partiels sont des blocs de différence;
v : pour tous les blocs partiels, le vecteur de mouvement a la valeur zéro;
w : pour tous les blocs partiels l'information principale est constituée exclusivement de zéros;
x : tous les blocs partiels sont des blocs de l'image vidéo arrivante;
et les lettres soulignées signifient la négation des propositions qui y sont associées, tandis que la juxtaposition de lettres indique leur conjonction logique.

14. Codeur hybride suivant l'une quelconque des revendications 10 à 13, caractérisé en ce qu'en tant qu'information auxiliaire pour des blocs partiels le signe END-OF-BLOCK est utilisé lorsque l'information principale d'un bloc partiel est constituée exclusivement de zéros.

15. Codeur hybride suivant l'une quelconque des revendications 10 à 14, caractérisé en ce que le codeur hybride ne détermine le vecteur de mouvement que pour des macroblocs.

16. Codeur hybride suivant l'une quelconque des revendications 10 à 15, caractérisé en ce que les moyens de structuration n'utilisent des macroattributs qui indiquent que les informations auxiliaires sont valables pour tous les blocs partiels d'un macrobloc que lorsque leur utilisation mènerait à un plus petit nombre de bits pour les informations auxiliaires que dans le cas où le codeur hybride associerait à chaque bloc partiel des informations auxiliaires de même contenu.

17. Codeur hybride suivant l'une quelconque des revendications 10 à 16, caractérisé en ce que le codeur hybride traite les macroblocs comme des blocs partiels.

18. Décodeur hybride pour le décodage d'images vidéo qui ont été codées selon les pas de codage du procédé suivant l'une quelconque des revendications 1 à 8, caractérisé en ce que le décodeur hybride utilise les macroattributs pour associer à chaque bloc partiel l'information auxiliaire de bloc partiel indiquée.
